Europäisches Patentamt

European Patent Office

Office européen des brevets

(19)

(11) EP 1 098 380 A1

(12) EUROPEAN PATENT APPLICATION
published in accordance with Art. 158(3) EPC

(43) Date of publication:
09.05.2001 Bulletin 2001/19

(51) Int. Cl.⁷: H01M 8/02

(21) Application number: 99924033.6

(86) International application number:
PCT/JP99/03190

(22) Date of filing: 15.06.1999

(87) International publication number:
WO 99/66579 (23.12.1999 Gazette 1999/51)

(84) Designated Contracting States:
BE DE ES FR GB IT SE

(30) Priority: 18.06.1998 JP 18992798

(71) Applicant:
TOYOTA JIDOSHA KABUSHIKI KAISHA
Aichi-ken 471-8571 (JP)

(72) Inventors:
• YOSHIMURA, Joji,
Toyota Jidosha K. K.
Toyota-shi, Aichi 471-8571 (JP)

• MIZUNO, Seiji,
Toyota Jidosha K. K.
Toyota-shi, Aichi 471-8571 (JP)

(74) Representative:
Leson, Thomas Johannes Alois, Dipl.-Ing.
Patentanwälte
Tiedtke-Bühling-Kinne & Partner,
Bavariaring 4
80336 München (DE)

(54) FUEL CELL GAS SEPARATOR

(57) The present invention is directed to a gas separator for fuel cells obtained as a laminate of unit cells, wherein the gas separator is one constituent of each unit cell, fuel cells using such gas separators, and a method of manufacturing such a gas separator. The gas separator is obtained by press molding a metal plate. The process of forming predetermined rugged shapes in both faces of the gas separator by press molding causes the gas separator to be distorted. The distortion of the gas separator results in a variety of problems.

A gas separator (30) of the present invention has a base plate unit (60) that is obtained by bonding two base plates (62) and (64) molded to have predetermined rugged shapes to each other, filler units (66) that are formed in spaces defined by the two base plates (62) and (64) corresponding to the predetermined rugged shapes of the base plates (62) and (64), and a coat layer(68) that is formed on surface of the base plate unit (60). In the separator (30) of this configuration, distortions occurring in the base plates (62) and (64) molded to have the predetermined rugged shapes are mutually corrected by joining the two base plates (62) and (64) with each other. This arrangement thus effectively prevents a distortion from occurring in the separator (30). An electrically conductive material is interposed between the pair of base plates (62) and (64) to form the filler units (66). This enhances the electrical conductivity and the thermal conductivity of the separator (30).

Fig.1

EP 1 098 380 A1

## Description

Technical Field

The present invention relates to a gas separator for fuel cells as well as to fuel cells using such gas separators and a method of manufacturing the gas separator for fuel cells. More specifically the present invention pertains to a gas separator that is disposed between adjoining unit cells in a fuel cells stack including a plurality of unit cells laid one upon another, is combined with an adjoining member to define either a flow path of a gaseous fuel or a flow path of an oxidizing gas, and separates a flow of gaseous fuel from a flow of oxidizing gas. The present invention also pertains to fuel cells using such gas separators and a method of manufacturing the gas separator for fuel cells.

Background Art

The gas separator for fuel cells is one constituent of a fuel cells stack, in which a plurality of unit cells are laid one upon another, and has a sufficient gas impermeability to prevent a supply of gaseous fuel and a supply of oxidizing gas respective fed to adjoining unit cells from being mixed with each other. The gas separator for fuel cells is typically composed of a carbon material or a metal material. The metal material generally has excellent strength and actualizes thinner gas separators, compared with gas separators composed of the carbon material. The thickness reduction of the gas separators results in favorably reducing the size of the whole fuel cells stack.

The gas separator for fuel cells generally has a preset rugged structure that combines with adjoining members in the fuel cells stack to define a flow path of a gaseous fuel and a flow path of an oxidizing gas. One proposed method manufactures a gas separator having such a rugged structure and being composed of a metal material by press molding a metal plate (for example, JAPANESE PATENT LAID-OPEN GAZETTE No. 7-161365). This method manufactures the gas separator for fuel cells by the simple press molding, thus simplifying and shortening the manufacturing process, enhancing the productivity, and preventing an increase in manufacturing cost.

When a thin metal plate is press molded to a gas separator having preset rugged shapes on both faces thereof, the action of pressing the metal plate causes distortion of the resulting gas separator. In an assembly of fuel cells obtained by laying required members one upon another, the distorted gas separators may result in varying plane pressure at respective contacts of the gas separators with adjoining members. The distortion of the distorted gas separators incorporated in the fuel cells gives the areas having the lower plane pressure at the contact of the gas separator with an adjoining member. In such areas, the contact faces of the gas separator with an adjoining member substantially decrease to lower the electrical conductivity and increase the internal resistance in the activated fuel cells. Namely this damages the performances of the fuel cells. The areas of the low plane pressure also have lowered thermal conductivity, which causes a variation in internal temperature of the fuel cells and further deteriorates the performances of the fuel cells. In the assembly of fuel cells including the distorted gas separators, the sufficient gas sealing property may not be ensured in the circumferential areas of the gas separators.

The object of the present invention is thus to solve the above problems and to prevent distortion from occurring in a gas separator for fuel cells, in fuel cells using such gas separators, and in a method of manufacturing the gas separator for fuel cells.

Disclosure of the Invention

At least part of the above and the other related objects is attained by a first gas separator for fuel cells, which are constructed as a laminate of plural members including an electrolyte layer and electrode layers. The gas separator is included in the fuel cells as one of the plural members and has predetermined rugged shapes that are formed in both faces to define a flow path of a fluid passing through inside the fuel cells. Two thin plates with the predetermined rugged shapes formed in respective one faces thereof are bonded to each other across the respective other faces thereof to form this first gas separator.

The first gas separator of the present invention is obtained by bonding two thin plates having predetermined rugged shapes to each other. The two thin plates mutually compensate for the potential distortions occurring due to formation of the rugged shapes, thus reducing the distortion of the resulting gas separator. Compared with the prior art arrangement of forming the rugged shapes on both faces of one plate, the arrangement of joining the two thin plates together to separately form the rugged shapes on the respective faces of the resulting gas separator has a large degree of freedom in design of the rugged shapes on the surface of the gas separator. Compared with the prior art arrangement, the arrangement of the present invention also reduces the total thickness of the gas separator. In the prior art arrangement, one plate having a sufficient thickness is required to form the rugged shapes on both faces of the resulting separator. Such a thick plate is not required for the gas separator of the present invention. Using the gas separators having little distortion enables the substantially uniform plane pressure to be applied in each unit cell included in the assembly of fuel cells. This arrangement effectively prevents the internal resistance from increasing due to the partial decrease in plane pressure and ensures the sufficient performances of the fuel cells.

In this gas separator, it is desirable that a space defined by the two thin plates, if existing, is filled with an electrically conductive material.

This arrangement enhances the strength of the gas separator and reduces the required thickness of the resulting gas separator. This arrangement also enhances the total electrical conductivity of the gas separator and improves the performances of the resulting fuel cells including such separators. This arrangement further enhances the total thermal conductivity of the gas separator. The enhanced thermal conductivity allows the internal temperature to quickly rise at the start of the assembly of fuel cells including such separators, so as to shorten the stand-by time of the fuel cells. The enhanced thermal conductivity also improves the cooling efficiency of cooling water circulating inside the fuel cells, thus keeping the internal temperature of the fuel cells at a substantially constant level.

In the first gas separator for fuel cells according to the present invention, each of the thin plates may be a metal thin plate. This arrangement more significantly exerts the effect of reducing the potential distortion of the resulting gas separator. The metal material has greater strength than other materials like carbon material and thus advantageously reduces the required thickness of the resulting gas separator. The metal material is significantly distorted in the process of press molding. Application of the arrangement of the first gas separator for fuel cells in the present invention to the metal thin plates especially ensures the large effect of preventing the potential distortion.

In the gas separator for fuel cells of the present invention, the fluid passing through the flow path defined by the predetermined rugged shapes in the fuel cells is selected among a hydrogen-containing gaseous fuel, an oxygen-containing oxidizing gas, and a cooling fluid for cooling down the inside of the fuel cells.

The present invention is also directed to a first fuel cells stack that receives supplies of a hydrogen-containing gaseous fuel and an oxygen-containing oxidizing gas and generates an electromotive force through electrochemical reactions. The fuel cells stack includes gas separators for fuel cells in accordance with any one of claims 1 through 4.

The first fuel cells stack of the present invention includes the gas separators having little distortion. This arrangement causes a substantially uniform plane pressure to be applied in each unit cell of the fuel cells stack, so as to effectively prevent the internal resistance from increasing due to the partial decrease in plane pressure and ensure the sufficient performances of the fuel cells.

The present invention is further directed to a first method of manufacturing a gas separator for fuel cells, wherein the fuel cells are constructed as a laminate of plural members including an electrolyte layer and electrode layers, and the gas separator is included in the fuel cells as one of the plural members and has predetermined rugged shapes that are formed in both faces to define a flow path of a fluid passing through inside the fuel cells. The first method includes the steps of: (a) providing two thin plates that have the predetermined rugged shapes formed in respective one faces thereof, and (b) bonding the two thin plates to each other across the respective other faces thereof to form the gas separator.

The first method of the present invention gives the gas separator obtained by bonding two thin plates having predetermined rugged shapes to each other. The two thin plates mutually compensate for the potential distortions occurring due to formation of the rugged shapes, thus reducing the distortion of the resulting gas separator. Compared with the prior art arrangement of forming the rugged shapes on both faces of one plate, the arrangement of joining the two thin plates together to separately form the rugged shapes on the respective faces of the resulting gas separator has a large degree of freedom in design of the rugged shapes on the surface of the gas separator. Compared with the prior art arrangement, the arrangement of the present invention also reduces the total thickness of the gas separator. In the prior art arrangement, one plate having a sufficient thickness is required to form the rugged shapes on both faces of the resulting separator. Such a thick plate is not required for the gas separator of the present invention.

In accordance with one preferable application of the first method of the present invention, an electrically conductive material is interposed between the two thin plates to fill a space defined by the two thin plates, if existing, in the process of bonding the two thin plates to each other in the step (b). This arrangement gives the gas separator having the greater strength and the less thickness. This arrangement also enhances the electrical conductivity and the thermal conductivity of the resulting gas separator.

The present invention is also directed to a second method of manufacturing a gas separator for fuel cells, wherein the fuel cells are constructed as a laminate of plural members including an electrolyte layer and electrode layers, and the gas separator is included in the fuel cells as one of the plural members and has predetermined rugged shapes that are formed in both faces to define a flow path of a fluid passing through inside the fuel cells. The second method includes the steps of: (a) providing two thin plates; (b) laying the two thin plates one upon the other via an electrically conductive material interposed between the two thin plates; and (c) press molding and joining together the two thin plates, which are laid one upon the other via the electrically conductive material, so that the predetermined rugged shapes are formed in surfaces of the two thin plates joined together.

The second method of the present invention bonds two thin plates to each other simultaneously with press molding the thin plates. The predetermined rugged shapes are formed in the respective surfaces of the two thin plates by press molding. The two thin plates mutually compensate for the potential distortions occurring due to formation of the rugged shapes, thus reducing the distortion of the resulting gas separator. Like the first method of the present invention, this arrangement ensures a large degree of freedom in design of the rugged shapes on the surface of the gas separator and reduces the required thickness of the resulting gas separator.

In either of the first method or the second method of the present invention, each of the thin plates may be a metal thin plate. This arrangement further enhances the effect of preventing the distortion of the gas separator. Press molding the metal plate often causes a significant distortion. Application of the method of the present invention for the metal plate attains the remarkable effect of reducing the potential distortion.

The present invention is further directed to a second gas separator for fuel cells, which are constructed as a laminate of plural members including an electrolyte layer and electrode layers. The gas separator is included in the fuel cells as one of the plural members and has a predetermined rugged shape that is formed in surface thereof to define a flow path of a fluid passing through inside the fuel cells. The second gas separator includes: a separator base plate unit that is composed of a thin plate and has a plurality of apertures passing through a thickness of the separator base plate unit; and insert members that are mainly composed of an electrically conductive material and are respectively inserted into the plurality of apertures to form a convex structure on at least one face of the separator base plate unit.

In the second gas separator for fuel cells of the present invention, the predetermined rugged shape is formed on the surface of the gas separator by using the insert members, which are separate from the separator base plate unit. This arrangement effectively prevents the potential distortion of the gas separator due to formation of the rugged shape. Namely no bending or stretching force, which causes distortion, is applied to the separator base plate unit included in the gas separator.

In the gas separator for fuel cells having the predetermined rugged shapes on both faces thereof, the insert members fitted in the respective apertures are protruded from both faces of the separator base plate unit to form the convex structure for defining the predetermined rugged shapes at identical positions on both the faces of the gas separator. In the gas separator for fuel cells having one face with the predetermined rugged shape formed thereon and the other planar face, the insert members fitted in the respective apertures are protruded from only one face but not from the other face. The insert members are composed of the electrically conductive material. In the case where the insert members ensure the sufficient electrical conductivity required for the gas separator, the separator base plate unit is not required to have electrical conductivity. This extends the range of selection of the material applicable for the separator base plate unit.

The present invention is also directed to a second fuel cells stack that receives supplies of a hydrogen-containing gaseous fuel and an oxygen-containing oxidizing gas and generates an electromotive force through electrochemical reactions. The fuel cells stack includes gas separators for fuel cells in accordance with claim 10.

The second fuel cells stack of the present invention includes the gas separators having little distortion. This arrangement causes a substantially uniform plane pressure to be applied in each unit cell of the fuel cells stack, so as to effectively prevent the internal resistance from increasing due to the partial decrease in plane pressure and ensure the sufficient performances of the fuel cells.

The present invention is further directed to a third method of manufacturing a gas separator for fuel cells, wherein the fuel cells are constructed as a laminate of plural members including an electrolyte layer and electrode layers, and the gas separator is included in the fuel cells as one of the plural members and has a predetermined rugged shape that is formed in surface thereof to define a flow path of a fluid passing through inside the fuel cells. The third method includes the steps of: (a) providing a separator base plate unit composed of a thin plate; (b) perforating the separator base plate unit at predetermined positions to form a plurality of apertures passing through a thickness of the separator base plate unit; and (c) inserting insert members, which are mainly composed of an electrically conductive material, respectively into the plurality of apertures, so as to form the predetermined rugged shape in surface of the separator base plate unit.

The third method of the present invention uses the insert members that are separate from the separator base plate unit, so as to form the predetermined rugged shape on the surface of the gas separator for fuel cells. This arrangement effectively prevents the potential distortion of the resulting gas separator due to formation of the rugged shape. Namely no bending or stretching force, which causes distortion, is applied to the separator base plate unit included in the gas separator.

In the third method of the present invention, for example, the separator base plate unit is perforated in the step (b), and the insert members are press fitted in the plurality of apertures and cut at a preset position to form the predetermined rugged shape in the step (c). This method manufactures the gas separator for fuel cells by the simple processes like perforation, press-fitting, and cutting. Compared with the prior art method that press molds a metal plate or carbon material to a gas separator, this arrangement simplifies and shortens the manufacturing process. Compared with the conventional manufacturing method that bends and stretches the plate member, this arrangement utilizing the processes like perforation, press-fitting, and cutting ensures the enhanced accuracy in formation of the rugged shape.

In accordance with one preferable application of the third method of the present invention, each of the plurality of apertures and the insert members inserted therein have substantially circular cross sections.

This arrangement facilitates positioning of the insert members respectively inserted into the plurality of apertures. It is easy to prepare bar members having the substantially circular cross section. This extends the range of selection with regard to the size of the bar members used as the insert members (that is, the diameter of the bar members), thus enabling the fineness of the rugged shape to be adjusted arbitrarily. The members of the smaller diameter result in formation of the finer rugged shape. The third method of this application thus enables the finer rugged shape to be readily formed on the surface of the gas separator with a high accuracy.

Brief Description of the Drawings

Fig. 1 schematically illustrates the cross section of a separator 30;
Fig. 2 is a sectional view schematically illustrating the structure of a unit cell 28 as a unit constituent of a fuel cells stack;
Fig. 3 is a decomposed perspective view illustrating the structure of the unit cell 28;
Fig. 4 is a perspective view showing the appearance of a stack structure 14 obtained by laying a plurality of the unit cells 28 one upon another;
Fig. 5 shows a manufacturing process of the separator 30;
Fig. 6 shows the comparison of the performances between an assembly of fuel cells using the separators 30 and another assembly of fuel cells using separators without any filler units;
Fig. 7 is a sectional view schematically illustrating a separator 130 in a second embodiment;
Fig. 8 is a plan view illustrating the surface of the separator 130;
Fig. 9 shows a manufacturing process of the separator 130;
Fig. 10 shows part of the cross section in the vicinity of a circumferential area of the separator 130; and
Fig. 11 shows a second manufacturing process of the separator 30.

Best Modes of Carrying Out the Invention

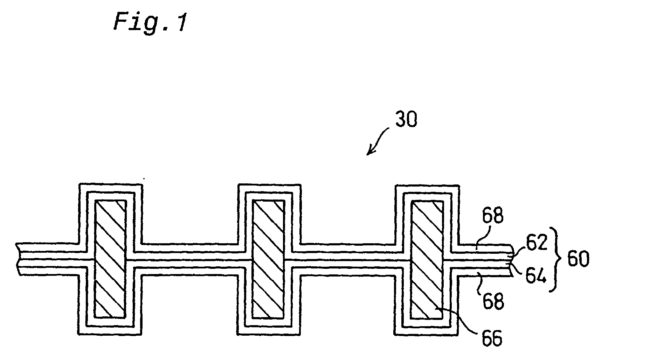

In order to make the configurations and the functions of the present invention discussed above more apparent, some modes of the present invention are described below as preferred embodiments. Fig. 1 schematically illustrates the cross section of a separator 30 in one preferred embodiment of the present invention. The separator 30 in the first embodiment of the present invention is composed of stainless steel, and includes two base plates 62 and 64 that constitute a base plate unit 60 and respectively have preset rugged faces, filler units 66 that are interposed between the two base plates 62 and 64 joined with each other and are respectively formed in spaces defined by the two base plates 62 and 64, and a coat layer 68 formed on the surface of the base plate unit 60. Prior to the detailed description of the separator 30, as a matter of convenience, the description first regards fuel cells using such separators 30.

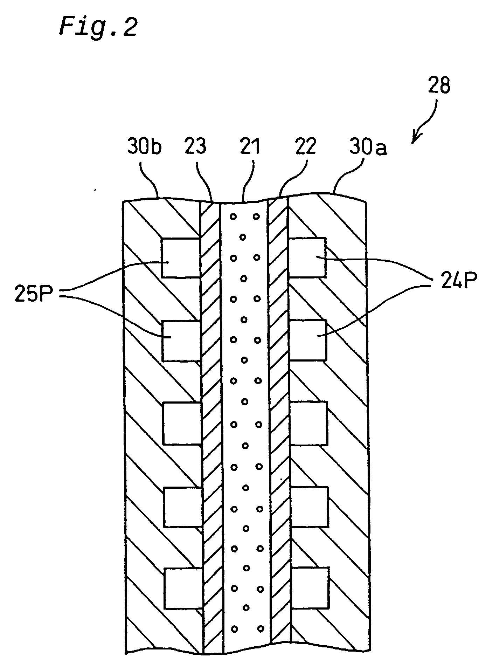

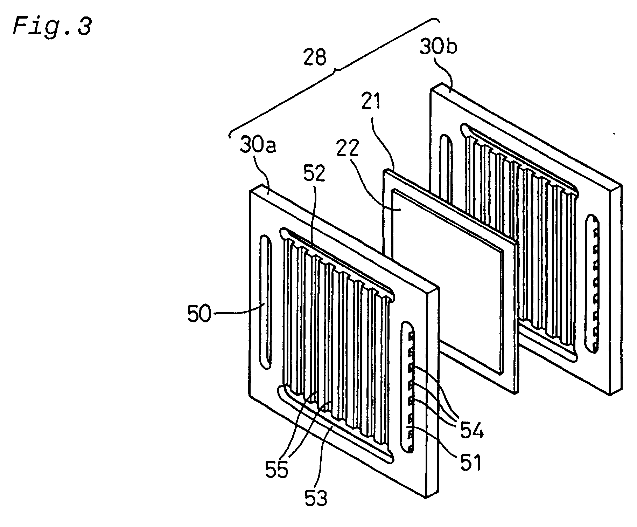

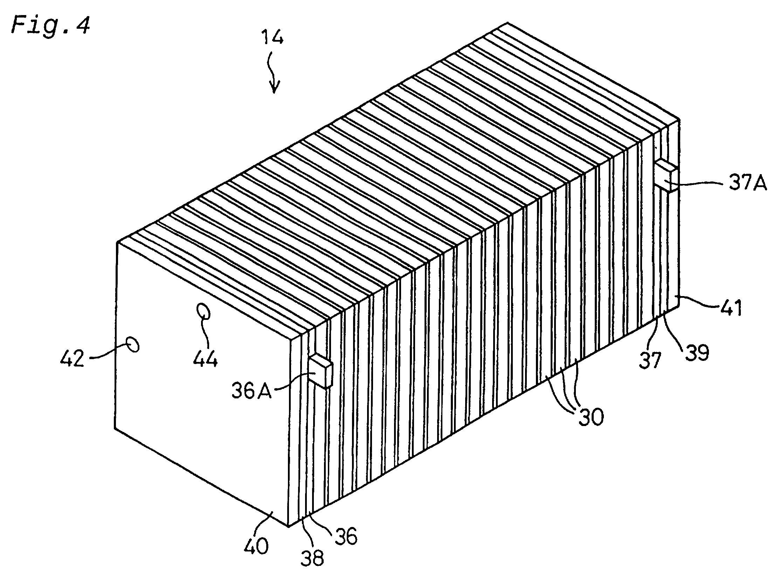

The fuel cells using the separators 30 in the first embodiment of the present invention have a stack structure, in which a plurality of unit cells are laid one upon another. Fig. 2 is a sectional view schematically illustrating the structure of a unit cell 28 as a unit constituent of the fuel cells. Fig. 3 is a decomposed perspective view illustrating the structure of the unit cell 28. Fig. 4 is a perspective view showing the appearance of a stack structure 14 obtained by laying a plurality of the unit cells 28 one upon another.

The fuel cells of the present invention are polymer electrolyte fuel cells, each of which includes a solid polymer membrane showing the favorable electrical conductivity in the wet state as an electrolyte layer. Each of the fuel cells receives a supply of hydrogen-containing gaseous fuel at its anode and a supply of oxygen-containing oxidizing gas at its cathode, so that electrochemical reactions expressed below proceed in the fuel cells:

$$H_2 \rightarrow 2H^+ + 2e^- \qquad (1)$$

$$(1/2)O_2 + 2H^+ + 2e^- \rightarrow H_2O \qquad (2)$$

$$H_2 + (1/2)O_2 \rightarrow H_2O \qquad (3)$$

Equation (1) represents a reaction proceeding at the anodes, and Equation (2) represents a reaction proceeding at the cathodes. The reaction expressed by Equation (3) accordingly proceeds in the fuel cells as a whole. As is known in the art, the fuel cells directly convert chemical energy of a fuel supplied thereto into electrical energy and have an extremely high energy efficiency. Each unit cell 28, which is a unit constituent of the fuel cells, includes an electrolyte membrane 21, an anode 22, a cathode 23, and a pair of separators 30a and 30b as shown in Fig. 2.

The anode 22 and the cathode 23 are gas diffusion electrodes that are disposed across the electrolyte membrane 21 to form a sandwich structure. The pair of separators 30a and 30b are further disposed across this sandwich structure and are respectively combined with the anode 22 and the cathode 23 to define flow paths of a gaseous fuel and an oxidizing gas. Gaseous fuel flow conduits 24P are defined by the anode 22 and the separator 30a, whereas oxidizing gas flow conduits 25P are defined by the cathode 23 and the separator 30b. A preset number of the unit cells 28 are laid one upon another to form a stack structure 14 as an assembly of the fuel cells.

Although ribs for defining the gas flow paths are illustrated in only a single face of each of the separators 30a and 30b in Fig. 2, ribs 54 and 55 are formed in both faces of each of the separators 30a and 30b in the actual fuel cells as shown in Fig. 3. The ribs 54 formed in one face of each of the separators 30a and 30b are combined with the adjoining anode 22 to define the gaseous fuel flow conduits 24P. The ribs 55 formed in the other face of each of the separators 30a and 30b are combined with the cathode 23 of the adjoining unit cell 28 to define the oxidizing gas flow conduits 25P. The separators 30a and 30b are respectively combined with the adjoining gas diffusion electrodes to define the gas flow paths, and also function to separate the flow of gaseous fuel from the flow of oxidizing gas between each pair of adjoining unit cells. In the actual assembly of fuel cells, there is no difference either in shape or in function between the separators 30a and 30b. The separators 30a and 30b are hereinafter generically referred to as the separator 30.

The ribs 54 and 55 formed on the faces of each separator may have any shapes that define the gas flow paths and enable a supply of gaseous fuel and a supply of oxidizing gas to be fed to the corresponding gas diffusion electrodes. In the example of Figs. 2 and 3, the ribs 54 and 55 formed on the faces of each separator are respectively constructed as a plurality of parallel grooves. In the drawing of Fig. 2 that schematically illustrates the structure of the unit cell 28, the gaseous fuel flow conduits 24P and the oxidizing gas flow conduits 25P are shown as parallel. In the drawing of Fig. 3, on the other hand, the ribs 54 and 55 formed on the faces of each separator 30 are shown as perpendicular to each other. The ribs 54 and 55 may have a different structure from these configurations. Each of the separators 30 is manufactured by joining the pair of press-molded base plates 62 and 64 with each other as discussed later, so that the ribs 54 and 55 may have any shape formable by press molding.

The electrolyte membrane 21 is a proton-conductive ion exchange membrane composed of a polymer electrolyte material, for example, a fluororesin, and shows favorable electrical conductivity in the wet state. In this embodiment, a Nafion (manufactured by du Pont) film is applied for the electrolyte membrane 21. Platinum or a platinum alloy consisting of platinum and another metal is applied as a catalyst on the surface of the electrolyte membrane 21.

The anode 22 and the cathode 23 are made of carbon cloth that is woven of carbon fiber yarns. The anode 22 and the cathode 23 may be made of carbon paper or carbon felt that also consists of carbon fibers, instead of the carbon cloth of this embodiment.

As mentioned previously, the separator 30 has the filler units 66 that are formed inside the metal base plate unit 60 and the coat layer 68 that covers over the base plate unit 60. The separator 30 has four slot apertures formed on the circumference thereof; that is, gaseous fuel slot apertures 50 and 51 that connect the ribs 54 with one another to define the gaseous fuel flow conduits 34P, and oxidizing gas slot apertures 52 and 53 that connect the ribs 55 with one another to define the oxidizing gas flow conduits 35P. In the assembly of fuel cells, the gaseous fuel slot apertures 50 and 51 of the separators 30 respectively form a gaseous fuel supply manifold and a gaseous fuel exhaust manifold, which pass through the fuel cells stack in its laminating direction. In a similar manner, the oxidizing gas slot apertures 52 and 53 of the separators 30 respectively form an oxidizing gas supply manifold and an oxidizing gas exhaust manifold, which pass through the fuel cells stack in its laminating direction.

In the process of assembling the fuel cells having the constituents discussed above, the separator 30, the anode 22, the electrolyte membrane 21, the cathode 23, and the separator 30 are successively laid one upon another in this sequence to form a unit cell laminate. Collector plates 36 and 37, insulator plates 38 and 39, and end plates 40 and 41 are further disposed across the unit cell laminate. This completes the stack structure 14 shown in Fig. 4. The collector plates 36 and 37 respectively have output terminals 36A and 37A to output an electromotive force generated in the fuel cells stack.

The end plate 40 has two apertures as shown in Fig. 4; that is a gaseous fuel aperture 42 and an oxidizing gas aperture 44. The insulator plate 38, which is adjacent to the end plate 40, and the adjoining collector plate 36 also have two apertures at the positions corresponding to the two apertures of the end plate 40. The gaseous fuel aperture 42 is open at the position corresponding to the center of the gaseous fuel slot apertures 50 of the separators 30. When the fuel cells stack is activated, the gaseous fuel aperture 42 is connected to a non-illustrated fuel supply unit to lead a supply of a hydrogen-rich gaseous fuel into the fuel cells. In a similar manner, the oxidizing gas aperture 44 is open at the position corresponding to the center of the oxidizing gas slot apertures 52 of the separators 30. When the fuel cells stack is activated, the oxidizing gas aperture 44 is connected to a non-illustrated oxidizing gas supply unit to lead a supply of an oxygen-containing oxidizing gas into the fuel cells.

The gaseous fuel supply unit and the oxidizing gas supply unit moist and pressurize the respective gases to predetermined levels, prior to the supplies of the respective gases. The gaseous fuel supply unit connected to the fuel cells of the embodiment feeds a hydrogen-rich gas, for example, a gas produced by reforming a hydrocarbon Like methanol, as the gaseous fuel. Gaseous hydrogen having a high purity may be used for the gaseous fuel. The oxidizing gas supply unit feeds a gas containing a sufficient concentration of oxygen, for example, the air.

The end plate 41 has two apertures at specific positions different from the apertures of the end plate 40. The insulator plate 39 and the collector plate 37 also have two apertures at the positions corresponding to the two apertures of the end plate 41. One aperture formed in the end plate 41 is a gaseous fuel aperture that is open at the position corresponding to the center of the gaseous fuel slot apertures 51 of the separators 30. The other apertures formed in the end plate 41 is an oxidizing gas aperture that is open at the position corresponding to the center of the oxidizing gas slot apertures 53 of the separators 30. When the fuel cells stack is activated, the gaseous fuel aperture formed in the end plate 41 is connected with a non-illustrated gaseous fuel exhaust unit whereas the oxidizing gas aperture formed in the end plate 41 is connected with a non-illustrated oxidizing gas exhaust unit.

The stack structure 14 including the respective constituents discussed above is held under a predetermined pressing force in its laminating direction. This completes the stack of fuel cells. The configuration of pressing the stack structure 14 is omitted from the illustration.

The following describes the flow of the gaseous fuel and the flow of the oxidizing gas in the fuel cells stack constructed as above. The supply of the gaseous fuel is introduced from the gaseous fuel supply unit discussed above into the fuel cells via the gaseous fuel aperture 42 formed in the end plate 40. In the fuel cells, the flow of the gaseous fuel is led into the gaseous fuel flow conduits 24P of the respective unit cells 28 via the gaseous fuel supply manifold and subjected to the electrochemical reaction proceeding at the anodes of the respective unit cells 28. The flow of the gaseous fuel out of the gaseous fuel flow conduits 24P is collected in the gaseous fuel exhaust manifold, reaches the gaseous fuel aperture formed in the end plate 41, and is discharged from this gaseous fuel aperture to the outside of the fuel cells to be led into the gaseous fuel exhaust unit discussed above.

In a similar manner, the supply of the oxidizing gas is introduced from the oxidizing gas supply unit discussed above into the fuel cells via the oxidizing gas aperture 44 formed in the end plate 40. In the fuel cells, the flow of the oxidizing gas is led into the oxidizing gas flow conduits 25P of the respective unit cells 28 via the oxidizing gas supply manifold and subjected to the electrochemical reaction proceeding at the cathodes of the respective unit cells 28. The flow of the oxidizing gas out of the oxidizing gas flow conduits 25P is collected in the oxidizing gas exhaust manifold, reaches the oxidizing gas aperture formed in the end plate 41, and is discharged from this oxidizing gas aperture to the oxidizing gas exhaust unit discussed above.

The above description regards only the flow paths and the flows of the gaseous fuel and the oxidizing gas fed into the fuel cells. The actual fuel cells further include a cooling water flow path, through which cooling water flows. As described previously, the chemical energy of the fuel fed into the fuel cells is converted into electrical energy through the electrochemical reactions proceeding in the fuel cells. The conversion of the chemical energy into the electrical energy is not completely shifted, but the residual energy that is not converted into the electrical energy is released as heat. The fuel cells accordingly continue the heat generation together with the power generation. In order to keep the driving temperature of the fuel cells in a favorable temperature range, a cooling water flow path is generally formed in the fuel cells to allow the flow of cooling water in the fuel cells and remove the excess heat.

The separator 30 of the embodiment has two apertures (not shown) for defining the cooling water flow path, in addition to the gaseous fuel slot apertures 50 and 51 and the oxidizing gas slot apertures 52 and 53 shown in Fig. 3. The two apertures of the respective separators 30, which are laid one upon another to construct the stack structure 14, form a cooling water flow path that passes through the stack structure 14 to feed and discharge cooling water into and from intra-stack cooling water flow conduits. The fuel cells of the stack structure 14 also include cooling water flow conduit separators (not shown), each of which is arranged at every preset number of unit cells laid one upon another instead of the standard separator 30 and has a rugged structure on its surface to define cooling water flow conduits. The rugged structure formed on the surface of the cooling water flow conduit separator is combined with an adjoining member to define the intra-stack cooling water flow conduits. The intra-stack gas flow conduits arranged at every preset number of unit cells receives a supply of cooling water and discharges an exhaust of cooling water from and to the cooling water flow path consisting of the apertures as discussed above. The flow of cooling water functions to remove the excess heat produced in the course of power generation from the fuel cells.

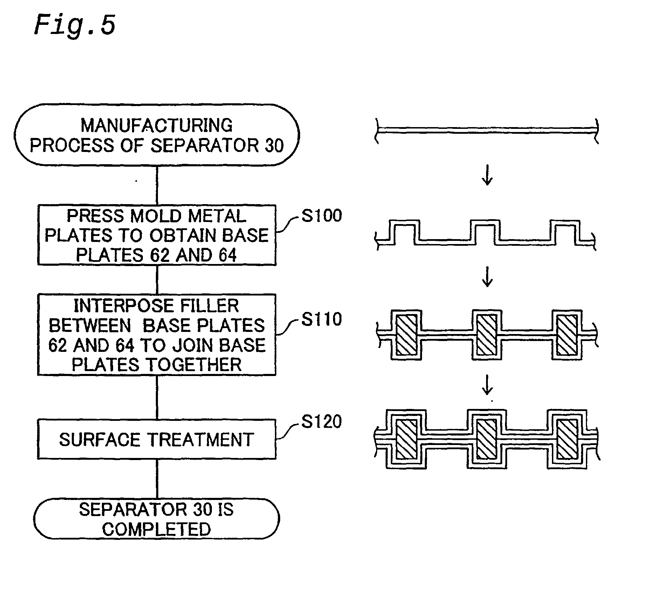

The following describes the structure of the separator 30, which characterizes the essential part of the present invention. The separator 30 has the base plate unit 60 including the two base plates 62 and 64, the filler units 66, and the coat layer 68 as mentioned previously. Fig. 5 shows a manufacturing process of the separator 30. Fig. 5 includes a flowchart showing the manufacturing process of the separator 30 and schematic views representing the respective steps of the flowchart. The following describes the manufacturing process of the separator 30 in detail with the drawing of Fig. 5.

The process first prepares the base plates 62 and 64 by press molding two metal plates (step S100). In this embodiment, stainless steel plates having a thickness of 0.3 mm are press molded under a plane pressure of 1 ton/cm$^2$. This forms convexes corresponding to the ribs 54 and 55 on the respective one faces of the base plates 62 and 64. The process subsequently interposes a filler between the pair of base plates 62 and 64, and presses the base plates 62 and 64 to make the base plates 62 and 64 adhere to each other (step S110). Namely the base plates 62 and 64 are joined with each other via the filler (in this embodiment, thermally expanding graphite) interposed between the base plates 62 and 64. This gives the base plate unit 60 including the filler units 66 formed in the spaces, which are defined by the convexes and located on the respective joining face sides of the base plates 62 and 64 (that is, the inner facing sides of the convexes corresponding to the ribs 54 and 55). Step S110 uses the thermally expanding graphite for the filler and presses the base plates 62 and 64 to make the base plates 62 and 64 joined with each other. A concrete procedure places a predetermined quantity of the thermally expanding graphite on the joining face sides of the base plates 62 and 64 and presses the pair of base plates 62 and 64 with the thermally expanding graphite interposed therebetween under a plane pressure of 2 ton/cm$^2$ in a mold having a shape corresponding to the convex structure. This joins the pair of base plates 62 and 64 with each other and completes the base plate unit 60, which includes the filler units 66 that are formed in the inner spaces corresponding to the convexes and are filled with the thermally expanding graphite.

The thermally expanding graphite is one of known carbon materials and obtained by heating an acid-treated carbon material, such as natural graphite or carbon black, to expand the volume. Thermal expansion causes the thermally expanding graphite to have a layered structure, and application of a compressive force enables the respective layers of the layered structure to be tightly bound to one another. Any binder is accordingly not required in the molding process. The procedure of locating the thermally expanding graphite between the pair of base plates 62 and 64 and pressing the base plates 62 and 64 in the mold completes the action of filling the spaces formed inside the base plate unit 60 with the thermally expanding graphite simultaneously with the action of joining the base plates 62 and 64 with each other. The thermally expanding graphite located between the pair of base plates 62 and 64 and subjected to the pressing process at step S110 may be in a powdery form or alternatively in a sheet form.

The process then carries out surface treatment for the base plate unit 60 having the inner spaces filled with the thermally expanding graphite (step S120), so as to complete the separator 30. The surface treatment carried out in this embodiment coats the surface of the base plate unit 60 with a carbon layer to form the coat layer 68. The coat layer 68 is formed by contact bonding a carbon sheet composed of the thermally expanding graphite to the face of the base plate unit 60 in a mold having a shape corresponding to configuration of the base plate unit 60. Alternatively powder of the thermally expanding graphite may be contact bonded directly to the face of the base plate unit 60 in a mold of a predetermined shape. In the process of contact bonding the thermally expanding graphite layer to the base plate unit 60, it is desirable to evacuate the inside of the mold used for contact bonding, in order to ensure the sufficient bonding strength. The contact bonding in the mold may be attained by mechanically pressing or by utilizing a hydrostatic pressure.

In the course of manufacturing the separator 30, the slot apertures are punched in the metal plate before or after the press molding at step S100, although not specifically mentioned in the above description. The gaseous fuel slot apertures 50 and 51 and the oxidizing gas slot apertures 52 and 53 are formed in the metal plate by punching.

The method of manufacturing the separator 30 having the above configuration in this embodiment 30 has the effect of giving a separator with little distortion. The base plates 62 and 64 manufactured by press molding have certain distortions according to their rugged shapes. Bonding the two base plates 62 and 64 to each other mutually corrects the distortions of the respective base plates 62 and 64, thus resulting in the base plate unit 60 with little distortion. When the separators with little distortion are used for the assembly of fuel cells, the plane pressure occurring in the respective unit cells of the fuel cells stack is made substantially constant. This arrangement effectively prevents the internal resistance from increasing due to the partial decrease in plane pressure, and thereby ensures the sufficient performances of the fuel cells stack.

The method of manufacturing the separator 30 in this embodiment has the additional effects common in the methods of manufacturing a metal separator by press molding, other than the effect of preventing distortion of the separator as discussed above. The method of press molding a metal plate is a convenient method that shortens the process of manufacturing the separator. Namely the method of this embodiment enables the separators 30 to be manufactured inexpensively by the simplified process. The metal material has excellent strength and thus gives the separators of the reduced thickness, compared with the separators of the carbon material. This desirably reduces the size of the whole fuel cells stack.

The technique of this embodiment manufactures the separator 30 by joining the two base plates 62 and 64 with each other. This arrangement significantly enhances the degree of freedom in the separator having the rugged surfaces. In the case where one metal plate is press molded to the separator, it is difficult to form the convexes in the same areas on both the faces of the separator. There is accordingly some restrictions in designing the rugged shapes formed on both the faces of the separator. Using the thick metal plate may ensure the sufficient degree of freedom in forming the convexes on each face of the separator. The thick separators, however, make the whole fuel cells stack undesirably bulky and are thus not practical. The method of this embodiment manufactures the separator 30 by bonding the two base plates 62 and 64 to each other, thus enabling the rugged shapes on both the faces of the separator 30 to be freely designed without any restrictions and without any increase in thickness of the separator 30.

In the structure of the embodiment, the spaces defined by the two base plates 62 and 64 are filled with the filler. This arrangement enhances the buckling strength in the areas forming the ribs 54 and 55 and reduces the potential creeps arising in the stack structure 14. Since the filler enhances the buckling strength in the areas forming the ribs 54 and 55, there is no necessity of increasing the thickness of the separator to ensure the sufficient strength. The arrangement of filling the spaces defined by the two base plates 62 and 64 with the filler enhances the electrical conductivity and the thermal conductivity of the separator 30, thus improving the performance of the fuel cells including the separators 30. Using the thermally expanding graphite having the excellent electrical conductivity for the filler heightens the electrical conductivity of the whole separator and thereby reduces the internal resistance in the fuel cells using such separators. Compared with the structure of not filling the spaces, the structure of filling the spaces with the filler gives the separator having the better thermal conductivity. The fuel cells including such separators have the enhanced cooling efficiency by the flow of cooling water that runs through the inside of the fuel cells. The enhanced cooling efficiency enables the internal temperature of the fuel cells to be kept substantially constant in a desired temperature range. The improved thermal conductivity of the separator enables the internal temperature of the whole fuel cells stack to be raised quickly at the time of starting the fuel cells, thus shortening the stand-by time of the fuel cells.

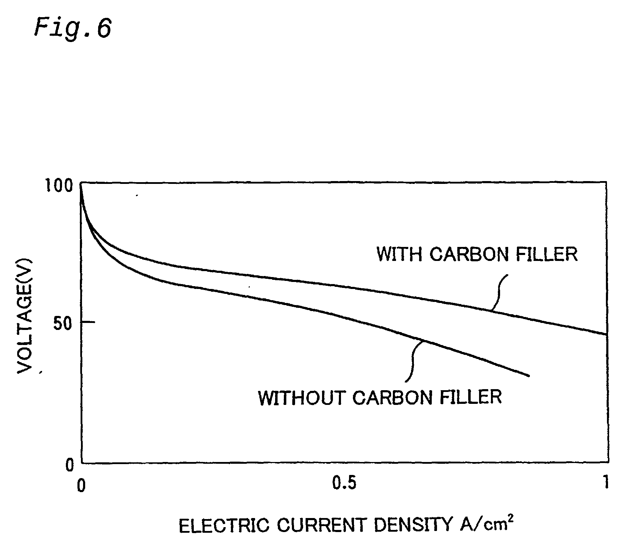

Fig. 6 shows the comparison of the performances between an assembly of fuel cells using the separators 30 of the embodiment and another assembly of fuel cells using separators that are similar to the separators 30 without any filler in the inner spaces. Each assembly of fuel cells is a laminate of 100 unit cells. As shown in the graph of Fig. 6, the assembly of fuel cells using the separators 30 keeps the sufficient level of output voltage with an increase in output electric current density, that is, with an increase in magnitude of the connecting load. The assembly of fuel cells using the separators without any filler in the inner spaces, on the other hand, has the reduced output voltage with the increase in magnitude of the connecting load. The separator 30 including the filler units 66 has the smaller internal resistance, so as to reduce the resistance polarization and maintain the sufficient level of output voltage.

In the embodiment discussed above, the filler units 66 filled with the filler are disposed between the two base plates 62 and 64 joined together to improve the electrical conductivity and the thermal conductivity of the separator 30. The spaces defined by the pair of base plates 62 and 64 may, however, be not filled with any filler as long as the resulting separator has the electrical conductivity and the thermal conductivity in respective allowable ranges. Even in this case, the arrangement of bonding the two base plates 62 and 64 to each other effectively prevents the resulting separator from being distorted. The absence of the filler units 66 desirably reduces the total weight of the separator. In the case where the filler units 66 are omitted, the two base plates 62 and 64 may be bonded to each other, for example, by spot welding or welding that utilizes vibrations or ultrasonic waves.

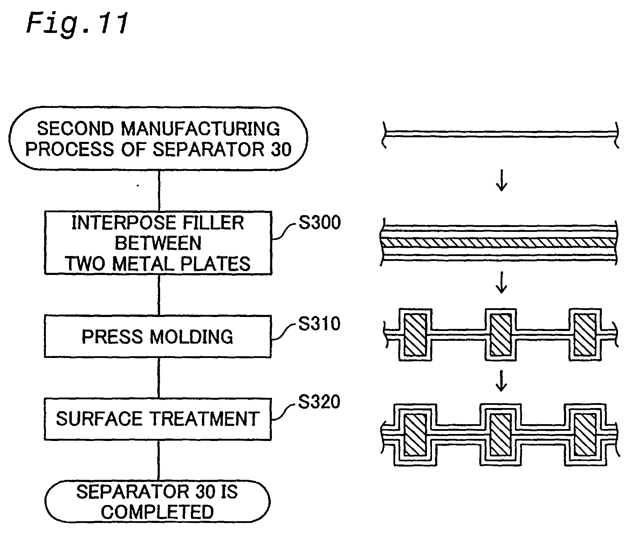

In the separator 30 of the embodiment, two metal plates are press molded to the base plates 62 and 64, and the filler for forming the filler units 66 is interposed between the pair of base plates 62 and 64 in the process of joining these base plates 62 and 64 with each other. One possible modification interposes the filler between two metal plates before the metal plates are press molded to the base plates. This modification is shown in Fig. 11 as a second manufacturing process of the separator 30. This modified process first provides two metal plates as in the case of the manufacturing process shown in Fig. 5 and interposes a filler (for example, thermally expanding graphite molded to a sheet in advance) between the two metal plates (step S300). The process subsequently press molds this sandwich structure, which includes the two metal plates disposed across the filler (step S310). This step causes predetermined rugged shapes to be formed in the two metal plates, and simultaneously bonds the two metal plates to each other across the filler. This gives the base plate unit 60 having the same structure as that of the base plate unit 60 obtained at step S110 in the flowchart of Fig. 5. The surface of the base plate unit 60 is then subjected to the surface treatment (step S320) in the same manner as step S120 in Fig. 5. This completes the separator 30 having the same structure as that of the embodiment discussed above. In the separator 30 manufactured by this modified procedure, the rugged shapes on both the faces of the separator are formed in the different metal plates. This arrangement thus effectively prevents the distortion of the separator as discussed in the above embodiment.

In the separator 30 of this embodiment, the filler units 66 are filled with the thermally expanding graphite. Any other filler having the sufficient electrical conductivity may alternatively be interposed between the two metal plates joined with each other, in order to improve the electrical conductivity and the thermal conductivity of the resulting gas separator. Other than the thermally expanding graphite used in the embodiment, one available example is a mixture of carbon powder, such as natural graphite or carbon black, with a binder (for example, a thermosetting resin). Available examples other than such carbon materials include electrically conductive pastes (adhesives containing carbon powder or metal powder), electrically conductive resins, and sponge-like foamed members composed of an electrically conductive material (for example, foamed nickel). In the case where the thermally expanding graphite used in the embodiment or any electrically conductive paste is used for the filler, the filler itself has integrity to allow the two metal plates to be readily bonded to each other by pressing. In the case of a carbon material other than the thermally expanding graphite, a binder is added to the carbon material to give the sufficient integrity to the resulting filler. In the case where the filler does not have sufficient integrity, for example, when foamed nickel is used for the filler, the metal plates are bonded to each other via an adhesive. When foamed nickel is used for the filler, the thermally expanding graphite may be used as an adhesive and disposed on a contact face of the metal plate with foamed nickel. Among these applications, the application of the thermally expanding graphite for the filler as discussed in the embodiment uses a single material for the filler without any additional material having the poorer electrical conductivity, thus advantageously maintaining the favorable electrical conductivity of the whole separator.

In the separator 30 of the embodiment, the surface of the base plate unit 60, which is obtained by bonding the two base plates 62 and 64 to each other, is covered with the coat layer 68 that is composed of the thermally expanding graphite, so as to have sufficient corrosion resistance. Any other material may be used to form the coat layer 68, as long as the material has sufficient electrical conductivity and gives sufficient corrosion resistance to the base plate unit 60. For example, as in the case of using the thermally expanding graphite, the arrangement of plating nickel as the coat layer 68 attains the sufficient corrosion resistance without damaging the electrical conductivity on the contact face with each adjoining gas diffusion electrode in the fuel cells. An electrically conductive paste may also be used for coating.

As long as the sufficient electrical conductivity is assured on the contact face of the separator 30 with each adjoining gas diffusion electrode in the fuel cells, it is not required to homogeneously cover the whole surface of the base plate unit 60 with the coat layer 68. One possible modification covers residual areas other than the contact face (for example, the faces forming the gaseous fuel flow conduits 24P and the oxidizing gas flow conduits 25P) with a material having less electrical conductivity but sufficient corrosion resistance. For example, one preferable arrangement coats the faces forming the gaseous fuel flow conduits 24P and the oxidizing gas flow conduits 25P with a hydrophilic material or a water repellent material. Silicon oxides and water-absorbing resins are examples of the hydrophilic material. Polytetrafluoroethylene is an example of the water repellent material.

The following describes the effects of the arrangement that coats the faces forming the gaseous fuel flow conduits 24P and the oxidizing gas flow conduits 25P with a hydrophilic material or a water repellent material. The electrochemical reactions expressed by Equations (1) through (3) given above proceed in the fuel cells including the separators 30. With a progress of such electrochemical reactions, water is produced at the cathodes as shown by Equation (2). The water is vaporized into the oxidizing gas and released out of the fuel cells. In the local areas of the fuel cells where the temperature is lowered, however, the water may be condensed to prevent the smooth flow of the oxidizing gas in the oxidizing gas flow path. The electrochemical reaction proceeding at the anodes produces the proton as shown by Equation (1). The proton generally shifts in the solid electrolyte membrane in the hydrated state. In the course of driving the fuel cells, the supply of gaseous fuel fed to the fuel cells is generally moistened to supply the water content from the anodes to the solid electrolyte membrane. The flow of moistened gaseous fuel may cause condensate in the gaseous fuel flow path. The condensate may prevent the smooth flow of the gaseous fuel. Application of the hydrophilic material for the faces forming the gaseous fuel flow conduits 24P and the oxidizing gas flow conduits 25P in the respective unit cells 28 of the fuel cells stack enables the condensate produced in these gas flow conduits to be led along the hydrophilic wall surface of the flow conduits, together with the gas flows, and be readily discharged from the unit cells 28. Application of the water repellent material for the faces forming the gas flow conduits, on the other hand, causes the condensate to be repelled by the water repellent wall surface of the flow conduits and be readily discharged from the unit cells 28 by the gas flows.

In the embodiment discussed above, the base plate unit 60 including the filler units 66 is subjected to the surface treatment to form the coat layer 68 in the course of manufacturing the separator 30. The surface treatment may alternatively be carried out for the respective base plates 62 and 64 before the base plates 62 and 64 are joined together to give the base plate unit 60. This alternative procedure press molds the metal plates to the base plates 62 and 64 (step S100 in Fig. 5), then carries out the surface treatment for the respective base plates 62 and 64 to form the coat layer 68 in the same manner as step S120 in Fig. 5, and subsequently interposes the filler between the base plates 62 and 64 covered with the coat layer 68 to join the base plates 62 and 64 together as in the same manner as step S110 in Fig. 5.

In the embodiment discussed above, the separator 30 has the coat layer 68 on its surface to attain the sufficient corrosion resistance. In the case where the material applied for the base plates 62 and 64 has sufficient corrosion resistance, the coat layer 68 may not be formed on the surface of the base plates 62 and 64. In this case, the arrangement of bonding the two base plates 62 and 64 to each other to form the base plate unit 60 also effectively reduces the potential distortion of the resulting separator.

In the above embodiment, the base plates 62 and 64 are composed of stainless steel. Similar effects to those discussed in the embodiment are attained by the base plates 62 and 64 composed of another metal, such as aluminum. In the ease where the surface of the separator is covered with the coat layer 68 to give the corrosion resistance, the metal applied for the material of the base plates 62 and 64 is not required to have sufficient corrosion resistance. Appropriate material may be selected for the base plates 62 and 64 by taking into account the weight and the cost of the metal.

The arrangement of joining the base plates 62 and 64 composed of a non-metal, electrically conductive material together to manufacture the separator also exerts the similar effects; that is, the resulting gas separator is thin and has less distortion. Examples of the non-metal, electrically conductive material include carbon powder mixed with a binder and thermally expanding graphite. In this case, the procedure press molds the thin plates composed of any of such carbon materials to two base plates having predetermined rugged shapes and joins the two base plates with each other to manufacture the separator.

In the case where any of these carbon materials is press molded to integrally form the separator having predetermined rugged shapes on both faces thereof, the rugged shapes formed on both the faces cause a variation in wall thickness on the same face. The difference in wall thickness results in a variation in plane pressure applied on the same face in the course of press molding. In order to ensure the sufficient strength of the resulting separator, it is required to set the wall thickness of the resulting separator equal to or greater than a predetermined value and to add a sufficient quantity of the binder. An increase in quantity of the binder added, however, leads to a decrease in electrical conductivity. In the arrangement of bonding the two base plates, which are obtained by molding the carbon material, to each other and thereby manufacturing the separator having the predetermined rugged shapes on both faces thereof, on the other hand, each base plate has the rugged shape only in a single face thereof that corresponds to one face of the separator. This arrangement ensures the uniform wall thickness of the whole base plate and enables the substantially constant plane pressure to be applied in the process of press molding the respective thin plates. This arrangement also reduces the quantity of the binder added and the wall thickness of the respective base plates composed of the carbon material. In the case where the two base plates, which are composed of an electrically conductive material other than metal, are bonded to each other, the filler having the electrical conductivity and being interposed between the two base plates enhances the electrical conductivity and the thermal conductivity and ensures the sufficient strength of the resulting separator as discussed previously in the embodiment.

In the embodiment discussed above, the rugged shapes formed in both the faces of the separator 30 define the gaseous fuel flow conduits 24P and the oxidizing gas flow conduits 25P. The rugged shape may, however, define a flow path for a fluid other than the gaseous fuel and the oxidizing gas. For example, the rugged shape defines a flow path of the cooling water that runs through inside of the fuel cells to keep the internal temperature of the gaseous fuel within a desired temperature range as discussed previously. The cooling water flow conduit separator manufactured by the method similar to the manufacturing method of the separator 30 shown in the embodiment exerts the same effects as discussed in the embodiment.

It is not required to form the flow path of the fluid in both faces of the separator manufactured in the above manner, but one face may be planar without any rugged shape. In one exemplified structure of the fuel cells, the separator that is adjacent to the cooling water flow conduit separator has one planar face that is in contact with the cooling water flow conduit separator and the other face that has the rugged structure to define the gaseous fuel flow conduits 24P or the oxidizing gas flow conduits 25P. In this case, this separator may be manufactured by the method similar to the manufacturing method of the separator 30 of the embodiment. The arrangement of bonding the two base plates together effectively reduces the potential distortion of the resulting separator having this structure. The structure of filling the inner spaces with the electrically conductive filler attains the effects discussed above, that is, the enhanced electrical conductivity and thermal conductivity.

In the first embodiment discussed above, the separator is manufactured by bonding the two base plates to each other, in order to reduce the potential distortion of the resulting separator. Another structure applicable to reduce the potential distortion of the resulting separator makes a planar base plate unit and a convex structure, which is formed on the base plate unit to define a gas flow path, as separate members. This structure is described below as a second embodiment.

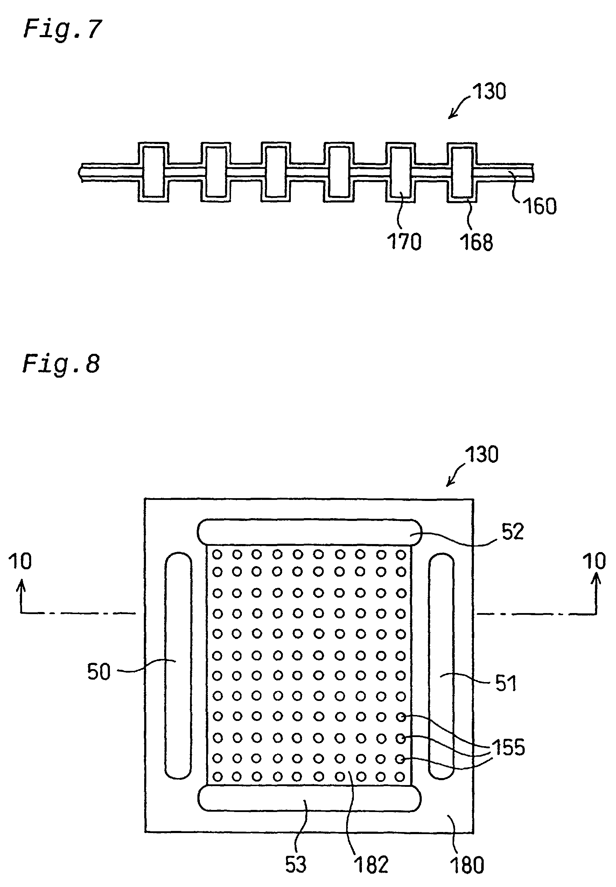

Fig. 7 is a sectional view schematically illustrating a separator 130 in the second embodiment. Fig.

8 is a plan view illustrating the surface of the separator 130. The separator 130 of the second embodiment includes a base plate unit 160 that Is composed of stainless steel and has a plurality of apertures having circular cross sections and running through the thickness of the base plate unit 160, a plurality of insert members 170 that are inserted into the respective apertures to be incorporated in the base plate unit 160, and a coat layer 168 that is composed of thermally expanding graphite and covers over the surface of the base plate unit 160 and the insert members 170. The separators 130 and other predetermined members are laid one upon another like the separators 30 of the first embodiment to construct the fuel cells similar to those of the first embodiment. In the description hereinafter, the constituents common to the first and the second embodiments are shown by the same numerals and are not specifically described here.

Like the separator 30, the separator 130 has the gaseous fuel slot apertures 50 and 51 and the oxidizing gas slot apertures 52 and 53 on the circumference thereof. The separator 130 has a plurality of ribs 155, which are arranged at identical positions in the respective faces and represent the convex structure formed on the base plate unit 160 by the plurality of insert members 170 arranged in a regular manner. The base plate unit 160 includes a planar portion 182 that is an area with the ribs 155 formed therein and a sealing portion 180 that defines a circumferential area of the separator 130 (that is, the circumference outside the gaseous fuel slot apertures 50 and 51 and the oxidizing gas slot apertures 52 and 53). The sealing portion 180 has a thicker cross section than that of the planar portion 182. The planar portion 182 that forms a concave surface below the sealing portion 180 is designed to allow the communication of the oxidizing gas slot apertures 52 and 53 on the respective one faces of the separators 130 in the assembly of fuel cells including the separators 130 (see Fig. 8). In this assembly of fuel cells, the ends of the ribs 155 are in contact with an adjoining gas diffusion electrode, and the oxidizing gas flow conduits 25P are defined by the side faces of the ribs 155, the surface of the planar portion 182, and the adjoining gas diffusion electrode. In a similar manner, the planar portion 182 is designed to allow the communication of the gaseous fuel slot apertures 50 and 51 on the respective other faces of the separators 130 in the assembly of fuel cells. The gaseous fuel flow conduits 24P are defined by the side faces of the ribs 155, the surface of the planar portion 182, and another adjoining gas diffusion electrode in the assembly of fuel cells.

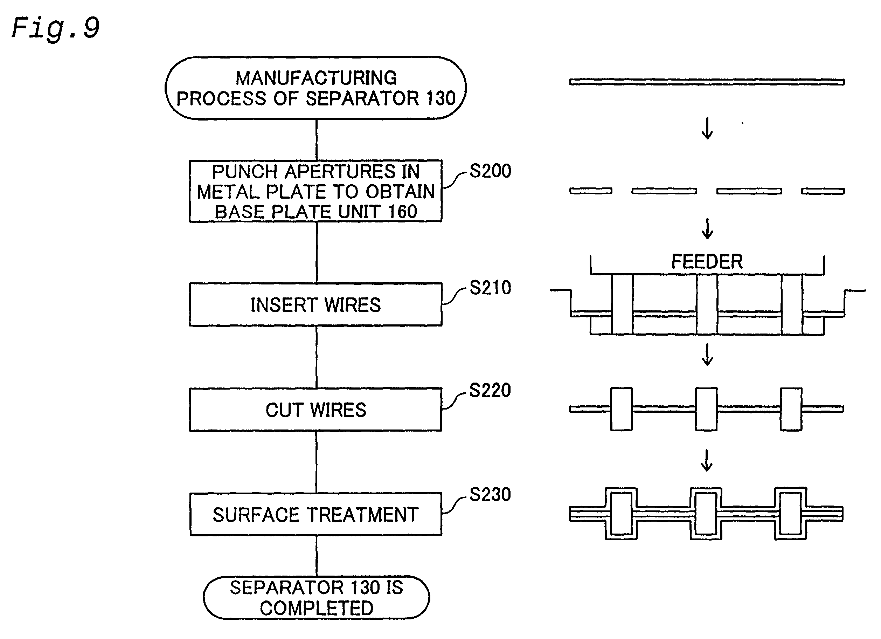

The following describes the manufacturing method of the separator 130. Fig. 9 shows a manufacturing process of the separator 130. Fig. 9 includes a flowchart showing the manufacturing process of the separator 130 and schematic views representing the respective steps of the flowchart.

The process first provides a thin plate of stainless steel and perforates the thin plate at a plurality of preset positions to form a plurality of apertures, thus obtaining the base plate unit 160 (step S200). The apertures formed in the stainless steel plate include the apertures formed at the positions corresponding to the respective ribs 155 of the separator 130 shown in Fig. 8 as well as the gaseous fuel slot apertures 50 and 51 and the oxidizing gas slot apertures 52 and 53. Among the apertures formed at step S200, each of the apertures formed at the positions corresponding to the respective ribs 155 has a diameter that is a little smaller than the diameter of the cross section of each rib 155. The process subsequently press fits a metal wire in each of the apertures formed at the positions corresponding to the respective ribs 155 by means of a feeder (step S210). Each of the wires press fitted here forms the rib 155 of the separator 130 and has a diameter a little greater than the diameter of each corresponding aperture formed at step S200. Using the wires having such a diameter ensures the sufficient sealing property between the metal base plate unit 160 and the wires being press fitted.

The process then cuts off the ends of the wires press fitted in the base plate unit 160 (step S220). The cutting positions of the respective wires (that is, the distances from the base plate unit 160) are fixed on each face of the base plate unit 160. Cutting the ends of the wires completes the insert members 170 press fitted in the respective apertures formed in the base plate unit 160, so that the plurality of ribs 155 are formed at the identical positions on both the faces of the base plate unit 160. After formation of the ribs 155, the process carries out the surface treatment in the same manner as step S120 in Fig. 5 for the base plate unit 160 and the plurality of ribs 155 (step S230), so as to complete the separator 130. The surface treatment of this step covers the surface of the base plate unit 160 and the plurality of ribs 155 with the thermally expanding graphite like the separator 30 of the first embodiment.

The manufacturing method of the separator 130 of the second embodiment makes the planar base plate unit 160 and the wires forming the ribs 155 as separate members. This arrangement effectively prevents the potential distortion of the separator having the rugged shapes. Construction of the ribs 155 as separate members causes no force of bending or stretching the metal plate, which leads to the potential distortion, to be applied to the base plate unit 60.

In the separator 130 of this embodiment, the predetermined rugged shapes are formed by the simple processes, that is, forming the apertures to define the ribs 155, press fitting wires into the apertures, and cutting off the wires press fitted. Compared with the conventional method that press molds the metal plate or the carbon material to manufacture the separator, this arrangement simplifies the manufacturing process and shortens the time required for manufacturing the separator.

The size of the ribs 155 formed on the surfaces of the separator 130 is freely selected by adjusting the diameter of the wires press fitted in the process of manufacturing the separator 130 of the embodiment. The wires of the thinner diameter give finer ribs with a higher accuracy. Compared with the arrangement of press molding the carbon material or the metal plate to form the rugged shapes, this arrangement enables the finer rugged shapes to be formed by a significantly easy process. This arrangement also prevents an increase in manufacturing cost due to the use of a mold having a complicated rugged structure.

The manufacturing process of the separator 130 of the embodiment uses a thinner metal plate, compared with the conventionally known method that press molds a metal plate to manufacture a gas separator having the rugged structure on both faces thereof. In the method of press molding a metal plate to manufacture the gas separator having predetermined rugged shapes, specific areas of the metal plate corresponding to the rugged shapes are bent or stretched in the course of press molding. The metal plate is accordingly required to have a sufficient thickness. In the method of this embodiment, on the other band, since the metal plate is simply perforated to form the apertures in which the insert members 170 are press fitted, the thinner metal plate than the metal plate used for the conventional press molding is applicable for the base plate unit 160. The manufacturing method of the separator 130 of the embodiment does not require the material to be bent or stretched in the course of press molding, and thus gives a thinner resulting separator, compared with the method of press molding the material mainly composed of carbon powder to manufacture the separator. Using the thin metal plate to manufacture the separator effectively reduces the size of the whole fuel cells stack.

In the second embodiment discussed above, the base plate unit 160 is composed of stainless steel. The effect of preventing the potential distortion of the resulting separator is also attained by the base plate unit 160 composed of another material, for example, any of other metals like aluminum, carbon materials, and resins. In the embodiment, the surface of the separator 130 is covered with the coat layer 168. The material applied for the base plate unit 160 is thus not required to have sufficient corrosion resistance but is required to have sufficient strength and to be sufficiently durable at driving temperatures of the fuel cells. In the case where the material applied for the base plate unit 160 has sufficient corrosion resistance, the coat layer 168 may not be formed on the surface of the base plate unit 160.

The separator 130 of the embodiment includes the base plate unit 160 and the ribs 155 as separate members. The electrical conductivity of the separator is assured by the ribs 155, so that the base plate unit 160 is not required to have the electrical conductivity. Compared with the arrangement of integrally press molding the separator, this arrangement extends the range of selection of the material applicable for the base plate unit 160. Namely the material having the better corrosion resistance and the material having the less weight are also applicable. The appropriate material is selected by taking into account the cost and the other factors.

In the embodiment discussed above, the wires are used to form the ribs 155. The wires have sufficient electrical conductivity and sufficient strength against the action of being press fitted in the base plate unit 160 or under the conditions in the assembly of fuel cells. In the manufacturing method of the separator 130 described above, the wires are press fitted into the apertures formed in the base plate unit 160 to define the ribs 155. The wires are preferable material to ensure the sufficient sealing property between the base plate unit 160 and the wires press fitted therein. As discussed in the above embodiment, the metal wires and the metal base plate unit 160 readily attain the required sealing property by the simple process of press fitting the wires having a little greater diameter into the apertures formed in the base plate unit 160. One modified procedure to attain the required sealing inserts the metal wires having a little smaller diameter than that of the apertures formed in the base plate unit 160 into the apertures, cuts off the wires to a preset length to complete the insert members 170, and applies the pressure on both the top and bottom of the insert members 170 for caulking. Another modified procedure to ensure the sufficient sealing property between the ribs 155 and the base plate unit 160 press fits the wires to form the ribs 155 and seals the clearances at the contacts of the ribs 155 with the base plate unit 160. In the last case, the wires for forming the ribs 155 may be composed of another electrically conductive material, such as carbon material.

As understood from the above description, the separator may include the base plate unit composed of a resin and the insert members composed of the carbon material. In this case, the base plate unit with the apertures in which the insert members are inserted may be manufactured by punching the apertures in a resin sheet or by injection molding. The action of punching the apertures in the resin sheet is easier than the action of perforating the metal plate to form the apertures as discussed in the embodiment. When the technique of injection molding is applied to manufacture the base plate unit, a structure corresponding to the sealing portion 180, which will be discussed later, is formed simultaneously with the apertures in which the insert members are inserted. This arrangement enables the sealing portion to be formed integrally to ensure the sufficient gas sealing property in the fuel cells. Compared with the conventional method of manufacturing the separator by press molding, this arrangement advantageously reduces the number of parts required for the assembly of fuel cells and thereby decreases the manufacturing cost (it is extremely difficult to integrally form the sealing portion by press molding as discussed later). Here the insert members may be composed of any suitable carbon material, for example, the thermally expanding graphite or a mixture of graphite powder with a binder (for example, a thermosetting resin). In the separator including the base plate unit composed of a resin and the insert members composed of the carbon material, both the base plate unit and the insert members have sufficient corrosion resistance, so that there is no necessity of forming the coat layer 168 unlike the separator 130 of the second embodiment.

The insert members may be composed of a resin instead of the electrically conductive material. In one applicable structure, the base plate unit is composed of a metal like the separator 130 of the second embodiment, and the insert members are composed of a resin. In this case, the whole surface of the separator or the surface of the insert members is covered with an electrically conductive film (for example, coated with a carbon material or plated with a metal). This ensures the sufficient electrical conductivity required for the separator for fuel cells.

The separator 130 has the coat layer 168 composed of the thermally expanding graphite to attain the sufficient corrosion resistance. Like the coat layer 68 in the separator 30 of the first embodiment, this coat layer 168 may be composed of any suitable material other than the carbon material, for example, a metal like nickel or an electrically conductive paste. The electrical conductivity is not required in the specific areas other than the contact faces with each adjoining gas diffusion electrode in the fuel cells stack. These specific areas may thus be coated with a hydrophilic material or a water repellent material in the same manner as the first embodiment. This gives the sufficient corrosion resistance and enhances the water drainage. In the case where the materials applied for the base plate unit 160 and the insert members 170 have sufficient corrosion resistance in an allowable level, the coat layer 168 may be omitted.

The method of the second embodiment perforates the metal plate to form the apertures and does not form the rugged shapes by press molding. This arrangement advantageously keeps the thickness of the base plate unit 160 unchanged in the course of manufacturing the base plate unit 160. This arrangement enables the metal plate including the circumferential area of the thicker cross section (that is, the area corresponding to the sealing portion 180) to be applied for the base plate unit 160. In the stack of fuel cells including the separators 130 manufactured in the above manner, the areas of the thicker cross section readily ensure the required gas sealing property.

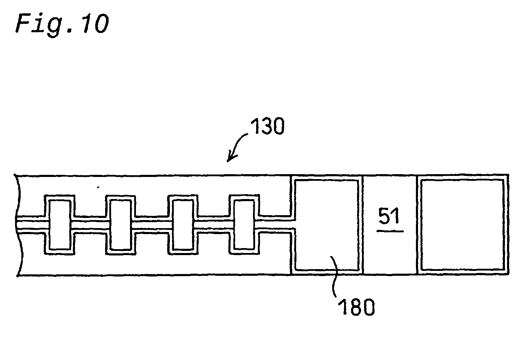

Fig. 10 shows part of the cross section of the separator 130 (the vicinity of the circumferential part of the separator 130) taken on the line 10-10 in Fig. 8. As described previously, the base plate unit 160 of the separator 130 includes the planar portion 182 that has the ribs 155 formed by the insert members 170 therein and the sealing portion 180 that is arranged in the circumferential part of the separator 130 and has a thicker cross section. Although not specifically mentioned in the manufacturing method of the separator 130, the metal plate having the seal portion 180 on the circumferential area thereof is provided in the manufacturing process shown in Fig. 9. In the assembly of fuel cells using the separators 130, each having the sealing portion 180 on the circumferential area thereof, each adjoining pair of separators 130 is in contact with each other via the respective sealing portions 180, which readily attains the sufficient gas sealing property.

In the case where the gas separator is manufactured by press molding a metal plate, the thickness of the metal plate is varied in the course of press molding. It is thus substantially impossible to use a metal plate that has a thicker-wall portion of a predetermined thickness corresponding to the sealing portion in the circumferential area thereof. The conventional method generally adopted provides a separate sealing member that is attached to the circumferential area of the gas separator, or makes the member having the rugged shape to define the gas flow path in each unit cell and the member defining apertures for manifolds as separate members. In the method of the above embodiment, the separator 130 is manufactured by using the metal plate having the sealing portion 180 formed in advance. Compared with the conventional technique of press molding, this arrangement effectively reduces the number of parts required for the assembly of fuel cells.

The present invention is not restricted to the above embodiments or their modifications, but there may be many other modifications, changes, and alterations without departing from the scope or spirit of the main characteristics of the present invention.

Industrial Applicability

As discussed above, the technique of the present invention applied to the gas separator for fuel cells, the fuel cells using such gas separators, and the method of manufacturing such a gas separator for fuel cells is effectively usable in the fields of manufacture and sales of fuel cells as well as in the fields of manufacture and sales of electric vehicles with the fuel cells mounted thereon.

**Claims**

1.   A gas separator for fuel cells, said fuel cells being constructed as a laminate of plural members including an electrolyte layer and electrode layers, said gas separator being included in said fuel cells as one of said plural members and having predetermined rugged shapes that are formed in both faces to define a flow path of a fluid passing through inside said fuel cells,

wherein two thin plates with the predetermined rugged shapes formed in respective one faces thereof are bonded to each other across the respective other faces thereof to form said gas separator.

2. A gas separator for fuel cells in accordance with claim 1, wherein a space defined by said two thin plates, if existing, is filled with an electrically conductive material.

3. A gas separator for fuel cells in accordance with claim 1, wherein each of said thin plates is a metal thin plate.

4. A gas separator for fuel cells in accordance with claim 2, wherein each of said thin plates is a metal thin plate.

5. A gas separator for fuel cells in accordance with claim 1, wherein the fluid passing through the flow path defined by the predetermined rugged shapes in said fuel cells is selected among a hydrogen-containing gaseous fuel, an oxygen-containing oxidizing gas, and a cooling fluid for cooling down the inside of said fuel cells.

6. A gas separator for fuel cells in accordance with claim 2, wherein the fluid passing through the flow path defined by the predetermined rugged shapes in said fuel cells is selected among a hydrogen-containing gaseous fuel, an oxygen-containing oxidizing gas, and a cooling fluid for cooling down the inside of said fuel cells.

7. A fuel cells stack receiving supplies of a hydrogen-containing gaseous fuel and an oxygen-containing oxidizing gas and generating an electromotive force through electrochemical reactions,

said fuel cells stack comprising gas separators for fuel cells in accordance with any one of claims 1 through 6.

8. A method of manufacturing a gas separator for fuel cells, said fuel cells being constructed as a laminate of plural members including an electrolyte layer and electrode layers, said gas separator being included in said fuel cells as one of said plural members and having predetermined rugged shapes that are formed in both faces to define a flow path of a fluid passing through inside said fuel cells,

said method comprising the steps of:

(a) providing two thin plates that have the predetermined rugged shapes formed in respective one faces thereof; and

(b) bonding said two thin plates to each other across the respective other faces thereof to form said gas separator.

9. A method in accordance with claim 8, wherein an electrically conductive material is interposed between said two thin plates to fill a space defined by said two thin plates, if existing, in the process of bonding said two thin plates to each other in said step (b).

10. A method of manufacturing a gas separator for fuel cells, said fuel cells being constructed as a laminate of plural members including an electrolyte layer and electrode layers, said gas separator being included in said fuel cells as one of said plural members and having predetermined rugged shapes that are formed in both faces to define a flow path of a fluid passing through inside said fuel cells,

said method comprising the steps of:

(a) providing two thin plates;
(b) laying said two thin plates one upon the other via an electrically conductive material interposed between said two thin plates; and
(c) press molding and joining together said two thin plates, which are laid one upon the other via the electrically conductive material, so that the predetermined rugged shapes are formed in surfaces of said two thin plates joined together.

11. A method in accordance with any one of claims 8 through 10, wherein each of said thin plates is a metal thin plate.

12. A gas separator for fuel cells, said fuel cells being constructed as a laminate of plural members including an electrolyte layer and electrode layers, said gas separator being included in said fuel cells as one of said plural members and having a predetermined rugged shape that is formed in surface thereof to define a flow path of a fluid passing through inside said fuel cells,

said gas separator comprising:
a separator base plate unit that is composed of a thin plate and has a plurality of apertures passing through a thickness of said separator base plate unit; and
insert members that are mainly composed of an electrically conductive material and are respectively inserted into said plurality of apertures to form a convex structure on at least one face of said separator base plate unit.

**13.** A fuel cells stack receiving supplies of a hydrogen-containing gaseous fuel and an oxygen-containing oxidizing gas and generating an electromotive force through electrochemical reactions,

said fuel cells stack comprising gas separators for fuel cells in accordance with claim 12.

**14.** A method of manufacturing a gas separator for fuel cells, said fuel cells being constructed as a laminate of plural members including an electrolyte layer and electrode layers, said gas separator being included in said fuel cells as one of said plural members and having a predetermined rugged shape that is formed in surface thereof to define a flow path of a fluid passing through inside said fuel cells,

said method comprising the steps of:

(a) providing a separator base plate unit composed of a thin plate;
(b) perforating said separator base plate unit at predetermined positions to form a plurality of apertures passing through a thickness of said separator base plate unit; and
(c) inserting insert members, which are mainly composed of an electrically conductive material, respectively into said plurality of apertures, so as to form the predetermined rugged shape in surface of said separator base plate unit.

**15.** A method in accordance with claim 14, wherein each of said plurality of apertures and said insert members inserted therein have substantially circular cross sections.

EP 1 098 380 A1

Fig.1

17

# Fig.2

Fig. 3

19

*Fig.4*

EP 1 098 380 A1

## Fig.5

```
┌─────────────────────────┐
│      MANUFACTURING       │
│ PROCESS OF SEPARATOR 30  │
└─────────────────────────┘
            │
┌─────────────────────────┐
│   PRESS MOLD METAL       │  ─S100
│ PLATES TO OBTAIN BASE    │
│   PLATES 62 AND 64       │
└─────────────────────────┘
            │
┌─────────────────────────┐
│    INTERPOSE FILLER      │
│ BETWEEN  BASE PLATES     │  ─S110
│ 62 AND 64 TO JOIN BASE   │
│    PLATES TOGETHER       │
└─────────────────────────┘
            │
┌─────────────────────────┐
│    SURFACE TREATMENT     │  ─S120
└─────────────────────────┘
            │
┌─────────────────────────┐
│     SEPARATOR 30 IS      │
│       COMPLETED          │
└─────────────────────────┘
```

## *Fig.6*

Fig.7

130

160

170    168

Fig.8

130

52

10

50

51

10

155

53    182    180

# Fig.9

```
      ┌──────────────────────────┐
      │    MANUFACTURING         │
      │ PROCESS OF SEPARATOR 130 │
      └──────────────────────────┘
                   │
      ┌──────────────────────────┐
      │ PUNCH APERTURES IN       │── S200
      │ METAL PLATE TO OBTAIN    │
      │ BASE PLATE UNIT 160      │
      └──────────────────────────┘
                   │
      ┌──────────────────────────┐
      │      INSERT WIRES        │── S210
      └──────────────────────────┘
                   │
      ┌──────────────────────────┐
      │       CUT WIRES          │── S220
      └──────────────────────────┘
                   │
      ┌──────────────────────────┐
      │    SURFACE TREATMENT     │── S230
      └──────────────────────────┘
                   │
      ┌──────────────────────────┐
      │    SEPARATOR 130 IS      │
      │       COMPLETED          │
      └──────────────────────────┘

                        FEEDER
```

EP 1 098 380 A1

*Fig.10*

130

51

180

# Fig.11

SECOND MANUFACTURING
PROCESS OF SEPARATOR 30

INTERPOSE FILLER
BETWEEN
TWO METAL PLATES — S300

PRESS MOLDING — S310

SURFACE TREATMENT — S320

SEPARATOR 30 IS
COMPLETED

## INTERNATIONAL SEARCH REPORT

International application No.

PCT/JP99/03190

| A. CLASSIFICATION OF SUBJECT MATTER |
|---|
| Int.Cl⁶ H01M8/02 |

According to International Patent Classification (IPC) or to both national classification and IPC

**B. FIELDS SEARCHED**

Minimum documentation searched (classification system followed by classification symbols)

Int.Cl⁶ H01M8/02

Documentation searched other than minimum documentation to the extent that such documents are included in the fields searched

| Jitsuyo Shinan Koho | 1926-1996 | Toroku Jitsuyo Shinan Koho | 1994-1999 |
|---|---|---|---|
| Kokai Jitsuyo Shinan Koho | 1971-1999 | Jitsuyo Shinan Toroku Koho | 1996-1999 |

Electronic data base consulted during the international search (name of data base and, where practicable, search terms used)

WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 58-93170, A (Tokyo Shibaura Electric Co., Ltd.), 2 June, 1983 (02. 06. 83), | 1, 3, 5, 7-8, 11 |
| A | Page 2, upper right column, line 14 to lower left column, line 7 ; Fig. 2 (Family: none) | 2, 4, 6, 9-10 |
| X | JP, 2-227964, A (Asea Brown Boveri AG.), 11 September, 1990 (11. 09. 90), | 1, 3, 5, 7-8, 11 |
| A | Page 4, upper left column, line 18 to upper right column, line 4 ; Fig. 5 & US, 5034288, A & EP, 378812, A | 2, 4, 6, 9-10 |
| PX | JP, 10-308227, A (Fuji Electric Co., Ltd.), 17 November, 1998 (17. 11. 98), | 1, 3, 5, 7-8, 11 |
| PY | Par. Nos. [0002], [0003] ; Figs. 5, 6 (Family: none) | 2, 4, 6, 9-10 |
| X | JP, 5-314999, A (Mitsubishi Electric Corp.), 26 November, 1993 (26. 11. 93), Claim 1 ; Figs. 1, 2 (Family: none) | 12-15 |

| ☒ Further documents are listed in the continuation of Box C. | ☐ See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 7 September, 1999 (07. 09. 99) | 21 September, 1999 (21. 09. 99) |

| Name and mailing address of the ISA/ Japanese Patent Office | Authorized officer |
|---|---|
| Facsimile No. | Telephone No. |

Form PCT/ISA/210 (second sheet) (July 1992)

INTERNATIONAL SEARCH REPORT

International application No.

PCT/JP99/03190

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 59-83361, A  (Engelhard Corp.),<br>14 May, 1984 (14. 05. 84),<br>Page 6, lower left column, line 8 to lower right column, line 4<br>& EP, 106603, A & US, 4826716, A<br>& US, 4938833, A & CA, 120264, A | 2, 4, 6, 9-10 |

Form PCT/ISA/210 (continuation of second sheet) (July 1992)